# NEUE EUROPÄISCHE PATENTSCHRIFT

(11) **EP 2 862 732 B2**
(45) Veröffentlichungstag und Bekanntmachung des Hinweises auf die Entscheidung über den Einspruch: **06.10.2021**
(45) Hinweis auf die Patenterteilung: 27.04.2016
(21) Anmeldenummer: 13189275.4
(22) Anmeldetag: 18.10.2013
(51) Int. Cl.: B60D 1/54, B60D 1/62

(54) **Steuermodul**
Control module
Module de commande

(43) Veröffentlichungstag der Anmeldung: 22.04.2015
(73) Patentinhaber: ConWys AG, 6023 Rothenburg (CH)
(72) Erfinder: Wystron, Alexander, 6003 Luzern (CH)
(74) Vertreter: Brinkmann & Partner

(56) Entgegenhaltungen:
- EP-A1- 1 634 729
- EP-A1- 2 130 697
- EP-A2- 1 225 069
- EP-A2- 1 477 338
- EP-B1- 1 084 872
- EP-B1- 1 380 446
- DE-A1- 10 004 523
- DE-A1- 10 135 272
- DE-A1- 19 612 960
- DE-A1-102009 012 709
- DE-A1-102011 052 433
- DE-C2- 19 711 535

## Beschreibung

Die Erfindung betrifft ein Steuermodul gemäß Oberbegriff des Anspruchs 1 sowie ein Verfahren gemäß Oberbegriff des Anspruchs 5.

Anhängerkupplungen für Kraftfahrzeuge sind aus dem Stand der Technik an sich gut bekannt. Eines gesonderten druckschriftlichen Nachweises bedarf es an dieser Stelle deshalb nicht.

Anhängerkupplungen dienen typischerweise dazu, einen Anhänger mechanisch mit einem Zugfahrzeug, beispielsweise einem motobetriebenen Kraftfahrzeug zu koppeln. Im verkoppelten Zustand bilden das Zugfahrzeug und der Anhänger einen Fahrzeugzug.

Aus dem Stand der Technik sind Anhängerkupplungen bekannt, die verschwenkbar am Kraftfahrzeug angeordnet sind. Eine solche verschwenkbare Anordnung gestattet es, die Anhängerkupplung im Benutzungsfall in ihre Arbeitsposition auszuschwenken. Wird die Anhängerkupplung nicht benötigt, kann sie in ihre Nicht-Gebrauchsstellung, die sogenannte Ruheposition verschwenkt werden.

Es sind aus dem Stand der Technik mittels eines Motors vollautomatisch verschwenkbare Anhängerkupplungen bekannt. Infolge einer benutzerseitigen Motorbetätigung verschwenkt die Anhängerkupplungen ohne weiteres Hinzutun des Benutzers aus ihrer Ruheposition in die Arbeitsposition und umgekehrt. Eine solch vollautomatische Verschwenkung ist insbesondere aus Gründen der vereinfachten Handhabung und des Bedienkomforts von Vorteil.

Die EP 1 634 729 A1 offenbart ein gattungsgemäßes Steuermoduf. Es wird der Antriebsstrom des Motors für die Anhängerkupplung überwacht. Aus einem erhöhten Stromfluss wird auf ein erhöhtes Drehmoment geschlossen, was wiederum das Erreichen einer Endlage oder das Anstoßen an ein Hindernis bedeutet. Daraufhin wird der Motor abgeschaltet.

Die EP 1 225 069 A2 betrifft eine Antriebssteuerung für eine Antriebsmotoranordnung einer Anhängerkupplung. Es ist allerdings nicht offenbart, auf welche Weise ein Bediener mit der Antriebssteuerung kommuniziert.

Die Erfindung bezieht sich auf ein Steuermodul, das der Steuerung einer Verschwenkbewegung einer mittels eines Motors vollautomatisch arbeitenden Anhängerkupplung dient. Es ist dabei die **Aufgabe** der Erfindung, ein Steuermodul sowie ein Verfahren zur Steuerung vorzuschlagen, die als Bestandteile eines Sicherheitskonzepts dazu dienen, etwaige benutzerseitige Fehlbedienungen auszuschließen, und dies bei gleichzeitiger Vereinfachung der Handhabung.

Zur **Lösung** dieser Aufgabe wird modulseitig mit der Erfindung vorgeschlagen ein Steuermodul mit den Merkmalen nach Anspruch 1.

Aus Gründen der erhöhten Handhabungssicherheit soll ein bestimmungsgemäßes Verschwenken der Anhängerkupplung nur dann gestattet sein, wenn bestimmte Verschwenkparameter vorliegen. Sobald ein oder mehrere Verschwenkparameter während der Durchführung einer Verschwenkbewegung der Anhängerkupplung nicht oder nicht mehr erfüllt ist beziehungsweise sind, erfolgt ein sofortiges Stillsetzen der Anhängerkupplung, das heißt eine Beendigung der Verschwenkbewegung der Anhängerkupplung. Eine weitere Verschwenkbewegung der Anhängerkupplung ist nur möglich, wenn sämtliche Verschwenkparameter eingehalten beziehungsweise wieder eingehalten sind. Dabei ist erfindungsgemäß vorgesehen, dass auch im Falle einer Wiedereinhaltung vorgebbarer Verschwenkparameter nicht eine Fortführung der zuvor unterbrochenen Verschwenkbewegung der Anhängerkupplung automatisch einsetzt. Eine Wiederaufnahme der Verschwenkbewegung ist nur nach manueller Betätigung durch den Benutzer möglich. Dies ist aus Sicherheitsgründen deshalb von Vorteil, weil benutzerseitig zunächst einmal überprüft werden kann, aus welchem Grunde eine zuvor eingeleitet Verschwenkbewegung der Anhängerkupplung beendet worden ist. Sobald der Grund für die Beendigung der Verschwenkbewegung gefunden und beseitigt ist, kann benutzerseitig eine visuelle Prüfung der Anhängerkupplung auf insbesondere freie Verschwenkbewegung durchgeführt werden. Die erfindungsgemäße Ausgestaltung gestattet es mithin, eine Wiederaufnahme einer zuvor unterbrochenen Verschwenkbewegung erst dann zu ermöglichen, wenn benutzerseitig die Wiederaufnahme aktiv durch entsprechende Betätigung des zugehörigen Bedienelements bestätigt ist.

Es ist dabei erfindungsgemäß vorgesehen, dass die Anhängerkupplung bei Wiederaufnahme der zuvor unterbrochenen Verschwenkbewegung zunächst zurück in ihre vorherige Ausgangsposition fährt. Dies kann die Ruhe- oder auch die Arbeitsposition sein, je nachdem, ob die vorherige Ausgangsposition die Arbeitsposition oder die Ruheposition war. Sobald die Anhängerkupplung in ihre vorherige Ausgangsposition zurückverfahren ist, kann durch eine nochmalige Betätigung durch den Benutzer die zuvor unterbrochene Verfahrbewegung erneut gestartet werden.

Mit dem erfindungsgemäßen Steuermodul ist mithin bei einer fehlerinduzierten Beendigung einer Verfahrbewegung der Anhängerkupplung sichergestellt, dass eine erneute Verfahrbewegung nicht automatisch infolge einer Fehlerbehebung einsetzt, sondern dass diese ausschließlich durch manuelle Betätigung seitens des Benutzers eingeleitet werden kann. Dabei erfolgt zunächst ein Zurückverschwenken der Anhängerkupplung in die ehemalige Ausgangsposition. Erst nachdem diese erreicht ist, kann durch wiederholte Betätigung durch den Benutzer die eigentlich gewünschte Verschwenkbewegung der Anhängerkupplung in die andere Endstellung eingeleitet werden.

Vorgebbare Verfahrensparameter, die bei einer Verschwenkbewegung der Anhängerkupplung überwacht, das heißt mit vorgebbaren Sollwerten verglichen werden, können beispielsweise der am Verschwenkmotor der Anhängerkupplung anliegende Strom, ungültige Signale des Bedienelements, eine ausgeschaltete Zündung des Kraftfahrzeuges und/oder dergleichen Sensorsignale sein.

Die Überwachung des am Motor der Anhängerkupplung anliegenden Stroms dient dem Einklemmschutz. Fährt die Anhängerkupplung infolge eines nicht freien Verschwenkbereichs auf ein Hindernis auf, so führt dies aufgrund einer konstant bleibenden Batteriespannung des Kraftfahrzeugs zu einem erhöhten Stromverbrauch. Liegt dieser erhöhte Stromverbrauch über einem vorgebbaren Wert, erfolgt aus Sicherheitsgründen eine Notabschaltung, das heißt eine Beendigung der an sich noch nicht ordnungsgemäß durchgeführten Verschwenkbewegung. Sobald das Hindernis aus dem Verschwenkbereich der Anhängerkupplung entfernt ist, kann benutzerseitig eine erneute Verschwenkbewegung der Anhängerkupplung eingeleitet werden, wobei im vorerläuterten Sinn zunächst eine Zurückverschwenkung der Anhängerkupplung in ihre vorherige Ausgangsposition erfolgt, bevor dann benutzerseitig die eigentlich gewünschte Verschwenkbewegung erneut eingeleitet werden kann.

Das Bedienelement zur Einleitung einer Verschwenkbewegung ist beispielsweise als Taster oder Schalter ausgebildet und befindet sich im Kofferraum des Kraftfahrzeugs. Eine bestimmungsgemäße Betätigung der Anhängerkupplung ist mithin nur bei geöffnetem Kofferraum möglich. Die geöffnete Kofferraum- beziehungsweise Heckklappe kann sensorisch erfasst und als Verschwenkparameter im erfindungsgemäßen Sinn eingesetzt werden. Wird beispielsweise bei einer Verschwenkbewegung der Anhängerkupplung die Heckklappe geschlossen, erfolgt in schon vorbeschriebener Weise ebenfalls ein Notstopp.

Ein weiterer möglicher Verschwenkparameter ist die Stellung der Zündung des Kraftfahrzeugs. Typischerweise ist eine Verschwenkbewegung der Anhängerkupplung nur bei ausgeschalteter Zündung des Kraftfahrzeugs möglich. Wird die Zündung während eines Verschwenkvorgangs der Anhängerkupplung eingeschaltet, wird dies mittels der Steuereinrichtung erkannt, was den sofortigen Nothalt zur Folge hat.

Auch eine nochmalige benutzerseitige Betätigung des Bedienelements während einer noch nicht vollständig abgeschlossenen Verfahrbewegung der Anhängerkupplung kann als Vergleichsparameter im vorgenannten Sinne dienen und zu einer vorzeitigen Beendigung einer eingeleiteten Verfahrbewegung der Anhängerkupplung dienen.

Die Überwachung der beispielhaft voraufgeführten Verfahrparameter dient dazu, eine Verfahrbewegung der Anhängerkupplung insbesondere aus sicherheitstechnischen Gründen zu verbessern. Mittels des erfindungsgemäßen Steuermoduls wird sichergestellt, dass eine eingeleitete Verschwenkbewegung der Anhängerkupplung nur dann bestimmungsgemäß beendet wird, wenn sich der Status der überwachten Verfahrparameter während der Durchführung einer Verschwenkbewegung der Anhängerkupplung nicht ändert. Wird eine solche Statusänderung erkannt, führt dies zu einer sofortigen Beendigung der Verschwenkbewegung.

Da im Fehlerfall, dass heißt bei einer vorzeitigen Beendigung einer eingeleiteten Verschwenkbewegung der Anhängerkupplung nicht in jedem Fall benutzerseitig sofort ersichtlich ist, wodurch der Fehler verursacht ist, erfolgt mittels des erfindungsgemäßen Steuermoduls keine automatische Zurückverschwenkung der Anhängerkupplung in ihre vorherige Ausgangsposition. Benutzerseitig muss vielmehr durch erneutes Betätigen des Bedienelements der Schwenkvorgang der Anhängerkupplung in die ehemalige Ausgangsposition aktiviert werden, wobei erst mit Erreichen dieser ehemaligen Ausgangsposition ein gültiger Zustand erreicht ist. Von besonderem Vorteil dieser Ausgestaltung ist, dass verwenderseitig aktiv zuerst die Fahrzeugumgebung und/oder die Umgebung der Anhängerkupplung kontrolliert und gegebenenfalls verändert werden kann, bevor der Verschwenkvorgang in die ehemalige Ausgangsposition durchgeführt wird. Insbesondere für den Einklemmschutz bietet das System so auch die Möglichkeit, die Anhängerkupplung in ihrer Position des Notstopps stehen zu lassen und zu kontrollieren, mithin das gegebenenfalls eingeklemmte Objekt zunächst entfernen zu können, bevor dann ein benutzerseitig initiiertes Zurückverschwenken der Anhängerkupplung in die Ausgangslage stattfindet.

Das erfindungsgemäße Steuermodul verfügt über eine Prüfeinrichtung. Diese Prüfeinrichtung prüft vor Beginn der Durchführung einer Verschwenkbewegung der Anhängerkupplung die Einhaltung vorgebbarer Sicherheitsparameter und gibt eine Verschwenkbewegung der Anhängerkupplung nur im Falle der Einhaltung dieser Parameter frei.

Mittels der Prüfeinrichtung ist sichergestellt, dass eine Verschwenkbewegung der Anhängerkupplung überhaupt nur dann durchgeführt wird, wenn gewisse, vorgebbare Sicherheitsparameter eingehalten sind. Sobald einer oder mehrerer dieser Sicherheitsparameter bei benutzerseitiger Betätigung des zur Einleitung einer Verschwenkbewegung der Anhängerkupplung vorgesehenen Bedienelements nicht erfüllt ist beziehungsweise sind, unterbleibt die benutzerseitig gewünschte Verschwenkbewegung, wobei der Benutzer bevorzugterweise hierüber durch einen visuellen und/oder akustischen Signalgeber informiert wird.

Derartige Sicherheitsparameter können beispielsweise der Zustand der Zündung des Kraftfahrzeugs, der Status der Heckklappe des Kraftfahrzeugs sowie die Bestückung einer kraftfahrzeugseitig vorgesehenen Steckdose zur Stromversorgung des Anhängers und/oder dergleichen sein.

Es kann beispielsweise vorgesehen sein, dass der Schaltzustand der Zündung des Kraftfahrzeugs als Sicherheitsparameter genutzt wird. Danach ist eine Verschwenkbewegung der Anhängerkupplung überhaupt und dann möglich, wenn die Zündung des Kraftfahrzeugs ausgeschaltet ist. Es wird so sichergestellt, dass eine Verschwenkbewegung nicht während der Fahrt, mithin bei eingeschalteter Zündung stattfinden kann.

Als weiterer Sicherheitsparameter kann die Stellung der Heckklappe des Kraftfahrzeugs dienen. So kann beispielsweise vorgesehen sein, dass eine Verschwenkbewegung der Anhängerkupplung überhaupt nur dann möglich ist, wenn die Heckklappe des Zugfahrzeugs geöffnet ist. Bei geschlossener Heckklappe, wenn also der für eine Einleitung einer Verschwenkbewegung der Anhängerkupplung benutzerseitig zu betätigende Taster nicht zugänglich ist, soll eine Verschwenkbewegung der Anhängerkupplung nicht gestattet sein. Es ist so sichergestellt, dass unter Umständen im Kofferraum des Kraftfahrzeugs sich hin und her bewegende Gegenstände zu einer ungewollten Bedienelementbetätigung und damit zu einer Verschwenkbewegung der Anhängerkupplung führen können.

Ein weiterer Sicherheitsparameter kann beispielsweise die Sensierung der fahrzeugseitig zur elektrischen Versorgung eines Anhängers vorgesehene Steckdose sein. So kann insbesondere vorgesehen sein, dass bei einer bestückten Steckdose eine Verschwenkbewegung der Anhängerkupplung nicht gestattet ist.

Die beispielhaft voraufgeführten Sicherheitsparameter können zu Beginn der Durchführung einer Verschwenkbewegung der Anhängerkupplung einzeln oder in Abhängigkeit voneinander überprüft werden. So kann beispielsweise vorgesehen sein, zunächst den Status der Zündung des Kraftfahrzeugs zu überprüfen. Wird die Zündung als aus erkannt, wird im nächsten Schritt der Belegungsstatus der Steckdose und/oder der Status der Heckklappe überprüft. Nur wenn sämtliche Sicherheitsparameter als eingehalten bestätigt sind, erfolgt durch die Prüfeinrichtung eine Freigabe und eine Verschwenkbewegung der Anhängerkupplung kann stattfinden.

Die Prüfeinrichtung und die vorbeschriebene Steuereinrichtung sind bevorzugterweise integraler Bestandteil ein und derselben elektronischen Schaltung.

Gemäß einem weiteren Merkmal der Erfindung verfügt das Steuermodul über einen visuellen und/oder akustischen Signalgeber, der während einer anhaltenden Verschwenkbewegung der Anhängerkupplung ein visuelles und/oder akustisches Signal abgibt.

Diese erfindungsgemäße Ausgestaltung dient dazu, einem Benutzer während des Vorgangs der Verschwenkung der Anhängerkupplung ein visuelles und/oder akustisches Signal zu geben, so dass dieser erkennen kann, dass die Verschwenkbewegung noch andauert und nicht etwa schon beendet ist. Als visuelle Signalgeber kommen insbesondere LEDs in Betracht. Diese können in das Bedienelement integriert sein und mit Betätigung des Bedienelements aufleuchten. Unterschiedliche Farbausgestaltungen sind selbstredend denkbar, beispielsweise im Sinne einer Ampelbeleuchtung.

Gemäß einem weiteren Merkmal der Erfindung ist ein weiterer visueller und/oder akustischer Signalgeber vorgesehen. Dieser dient dazu, bei Erreichen einer Endposition der Anhängerkupplung ein visuelles und/oder akustisches Signal abzugeben. Auch diese Maßnahme dient der erhöhten Sicherheit. Insbesondere dient sie dazu, dem Benutzer eine beendete Verschwenkbewegung der Anhängerkupplung zu signalisieren. Für den Benutzer wird so ersichtlich, dass die angefahrene Endposition, das heißt entweder die Ruheposition oder die Arbeitsposition auch tatsächlich erreicht worden ist. Die Anzeige der tatsächlich erreichten Endposition ist deshalb von Vorteil, weil zwischen der Dauer einer Verfahrbewegung und der tatsächlichen Erreichung einer der Endpositionen eine gewisse Zeit vergehen kann, beispielsweise zur Durchführung mechanischer Verriegelungen der Anhängerkupplung. Es ist insoweit durchaus möglich, dass ein Verfahren der Anhängerkupplung bereits vollendet ist, die sichere Endposition aber noch nicht erreicht ist, weil unter Umständen durchzuführende Verriegelungen, Sensorabfragen und/oder dergleichen noch nicht abgeschlossen sind. Das nach der Erfindung vorgesehene Signalgeberkonzept stellt insgesamt sicher, dass ein Benutzer einerseits über das Andauern einer Verschwenkbewegung informiert ist, sowie andererseits darüber, ob die gewünschte Endposition tatsächlich erreicht ist oder nicht. Dabei können zur akustischen und/oder visuellen Signalausgabe sowohl zur Anzeige der Verfahrbewegung als auch zur Anzeige der erreichten Endposition ein und dieselben Signalgeber eingesetzt werden. Für eine benutzerseitige Unterscheidung können unterschiedliche Aufleuchtdauern, Blinkfrequenzen und/oder dergleichen eingesetzt werden.

Gemäß einem weiteren Merkmal der Erfindung ist ein weiterer visueller und/oder akustischer Signalgeber vorgesehen, der dazu dient, bei nicht ordnungsgemäßer Stromversorgung und/oder defektem Steuermodul ein akustisches und/oder visuelles Signal abzugeben. Das Vorhandensein eines solchen Signalgebers hat den Vorteil, dass dem Benutzer Störfälle angezeigt werden können. In einem solchen Fall kommt es nämlich weder zu einer Verfahrbewegung der Anhängerkupplung noch zum Erreichen einer gewollten Endposition. Insoweit dient ein solcher Signalgeber dazu, dem Benutzer anzuzeigen, dass die von ihm gewünschte Verfahrbewegung der Anhängerkupplung nicht möglich ist, beispielsweise weil eine nicht ordnungsgemäße Stromversorgung anliegt und/oder das Steuermodul defekt ist, so dass eine bestimmungsgemäße Verschwenkbewegung der Anhängerkupplung nicht möglich ist. In diesem Fall verbleibt die Anhängerkupplung in ihrer gesicherten Ausgangslage und es wird dem Benutzer angezeigt, dass ein Verschwenken der Anhängerkupplung aus dieser gesicherten Ausgangslage nicht möglich ist.

Verfahrensseitig wird zur **Lösung** der vorstehenden Aufgabe vorgeschlagen ein Verfahren mit den Merkmalen nach Anspruch 5.

Eine Verfahrensdurchführung im erfindungsgemäßen Sinn ergibt die schon anhand des erfindungsgemäßen Steuermoduls beschriebenen Vorteile. Dabei ist erfindungsgemäß vorgesehen, dass vor Beginn der Durchführung einer Verschwenkbewegung der Anhängerkupplung die Einhaltung vorgebbarer Sicherheitsparameter überprüft und nur im Falle der Einhaltung dieser Parameter eine Verschwenkbewegung der Anhängerkupplung freigegeben wird.

Zur Weiterbildung des Verfahrens wird insbesondere mit Blick auf eine wünschenswerterweise zu erzielende vereinfachte Handhabung ferner vorgeschlagen, vor Durchführung einer ersten bestimmungsgemäßen Verschwenkbewegung der Anhängerkupplung ein Einlernen des Verschwenkbereichs der Anhängerkupplung durchgeführt wird, zu welchem Zweck die Anhängerkupplung wenigstens einmal in die Ruheposition und einmal in die Arbeitsposition verfahren wird, wobei zur Initialisierung des Einlernens innerhalb eines vorgebbaren Zeitfensters eine mehrfache benutzerseitige manuelle Bedienung eines zur Einleitung einer Verschwenkbewegung der Anhängerkupplung vorgesehenen Bedienelements für eine jeweils vorgebbare Zeitdauer erfolgt.

Bevor es nach einer Anordnung einer Anhängerkupplung an einem Kraftfahrzeug zu einer ersten bestimmungsgemäßen Verwendung der Anhängerkupplung kommen kann, bedarf es der vorherigen Einlernung der Anhängerkupplung beziehungsweise des Systems. Dabei dient das Einlernen insbesondere dazu, die maximalen Verschwenkwege zwischen den Endpositionen zu erfassen und die damit einhergehenden maximalen Strombelastungen des die Anhängerkupplung im Betriebsfall verschwenkenden Motors zu detektieren.

Um den Einlernvorgang zu starten, ist vorgesehen, dass innerhalb eines vorgebbaren Zeitfensters von zum Beispiel 30 Sekunden eine beispielsweise viermalige benutzerseitige Betätigung des zur Einleitung einer Verschwenkbewegung der Anhängerkupplung vorgesehenen Bedienelements erfolgt. Dabei muss eine jede Bedienung des Bedienelements für eine gewisse Zeitdauer von zum Beispiel 3 Sekunden erfolgen. Sobald diese für eine Initialisierung des Einlernens vorgesehenen Betätigungen des Bedienelements benutzerseitig durchgeführt werden, erfolgt zum Zwecke des Einlernens eine automatische Verschwenkbewegung der Anhängerkupplung, wobei vorgesehen ist, dass die Anhängerkupplung wenigstens einmal in die Ruheposition und einmal in die Arbeitsposition verfahren wird. Nach Abschluss dieser automatischen Verschwenkbewegung ist der Einlernvorgang beendet und eine bestimmungsgemäße Verwendung der Anhängerkupplung kann durch Betätigung des Bedienelements benutzerseitig vorgenommen werden.

Das Zeitfenster von 30 Sekunden, innerhalb welchem eine mehrfache benutzerseitige Bedienung des Bedienelements zu erfolgen hat, beginnt bevorzugterweise mit Einschaltung der Zündung des Kraftfahrzeugs. Nachdem benutzerseitig die Zündung eingeschaltet ist, hat dieser mithin 30 Sekunden Zeit, das Bedienelement beispielsweise viermal für je 3 Sekunden zu betätigen. Wird das Bedienelement nicht entsprechend häufig betätigt oder läuft das Zeitfenster ab, ohne dass eine entsprechend häufige Betätigung des Bedienelements stattgefunden hat, startet der Einlernvorgang nicht.

Das Einlernen gemäß vorstehender Verfahrensdurchführung erbringt den Vorteil, dass es benutzerseitig sehr einfach durchgeführt werden kann. Fehlbedienungen sind nahezu ausgeschlossen. Dabei kann der Bedienkomfort noch dadurch erhöht werden, dass entsprechende akustische und/oder visuelle Signalgeber vorgesehen sind, die beispielsweise anzeigen, wann eine Zeitdauer zur Bedienelementbetätigung beendet ist und/oder wann das mit Einschaltung der Zündung des Kraftfahrzeugs gestartete Zeitfenster ausläuft.

Der Einlernvorgang gemäß vorbeschriebener Verfahrensdurchführung ist auch aus sicherheitsrelevanten Aspekten von Vorteil. So wird durch die Zeitkombination von Zeitfenster einerseits und Zeitdauer zur Betätigung andererseits sichergestellt, dass eine ungewollte Betätigung des Bedienelements zur Einleitung des Einlernvorgangs sicher unterbunden ist. Insbesondere können im Kofferraum eines Kraftfahrzeugs sich hin und her bewegende Objekte oder Gegenstände nicht zu einer ungewollten Initialisierung des Einlernvorgangs bei einem Kontakt mit dem im Kofferraum typischerweise angeordneten Bedienelement ausführen.

Das erfindungsgemäße Steuermodul eignet sich insbesondere für Anhängerkupplungen der eingangs beschriebenen Art, die der Nachrüstung eines Kraftfahrzeugs dienen. Das Steuermodul kann in einfacher Weise an das Bordnetz eines Kraftfahrzeuges angeschlossen und zur benutzerseitigen Betätigung im Kofferraum montiert sein. Als Signaleingänge greift das Steuermodul sowohl fahrzeugseitige Signale über das Bordnetz als auch Sensorsignale von der kraftfahrzeugseitig zu montierenden Anhängerkupplung ab. Insgesamt wird mit dem erfindungsgemäßen Steuermodul eine sichere und einfache Handhabung einer automatisch motorisch verschwenkbaren Anhängerkupplung sichergestellt.

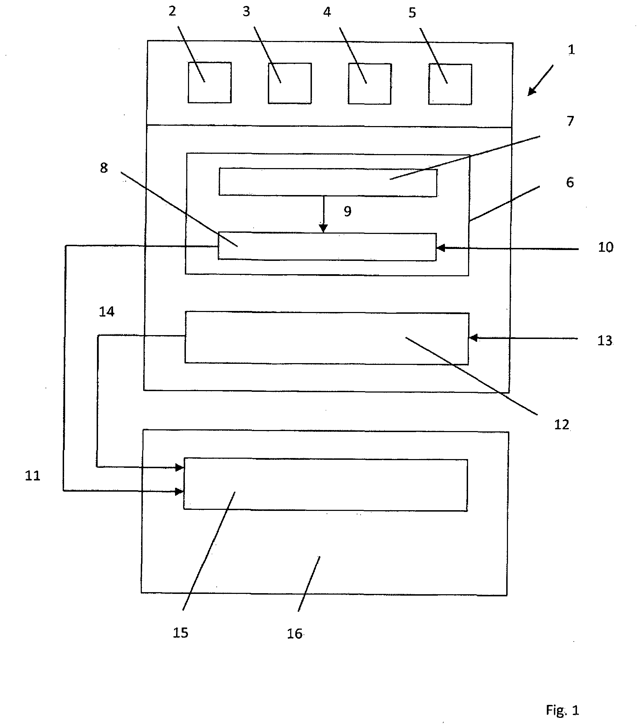

Weitere Merkmale und Vorteile der Erfindung ergeben sich aus der Beschreibung anhand der einzigen Figur 1, die in rein schematischer Darstellung ein Steuermodul nach der Erfindung zeigt.

Das Steuermodul 1 dient der Steuerung einer Verschwenkbewegung einer mittels eines Motors 15 vollautomatisch aus einer Ruheposition in eine Arbeitsposition und umgekehrt verschwenkbaren Anhängerkupplung 16 eines Kraftfahrzeugs.

Das Steuermodul 1 verfügt über ein Bedienelement 2, beispielsweise in Form eines Tasters, der benutzerseitig zu betätigen ist, um eine Verschwenkbewegung der Anhängerkupplung 16 einzuleiten. Es sind ferner visuelle und akustische Signalgeber in Form eines Summers 5 sowie zweier LEDs 3 und 4 vorgesehen, die einem Benutzer den Status der Anhängerkupplung 16 anzeigen.

Das Steuermodul 1 verfügt über eine Steuereinrichtung 6. Bestandteile dieser Steuereinrichtung 6 sind unter anderem eine Messeinrichtung 7 sowie eine Vergleichseinrichtung 8. Im bestimmungsgemäßen Verwendungsfall misst die Messeinrichtung bei einer Verschwenkbewegung der Anhängerkupplung 16 vorgebbare Verschwenkparameter, wie zum Beispiel den am Motor 15 der Anhängerkupplung 16 anliegenden Strom. In Entsprechung des erfassten Messergebnisses liefert die Messeinrichtung 6 ein Signal 9 an die Vergleichseinrichtung 8.

Die Vergleichseinrichtung 8 vergleicht das von der Messeinrichtung 7 stammende Signal 9 mit vorgebbaren Sollwerten 13 und beendet im Falle einer Überschreitung der Sollwerte die Verschwenkbewegung der Anhängerkupplung 16. Andernfalls wird das Verschwenken der Anhängerkupplung in ihre benutzerseitig gewünschte Endposition weiter fortgeführt.

Das Steuermodul 1 verfügt desweiteren über eine Prüfeinrichtung 12. Mittels dieser Prüfeinrichtung 12 wird vor Beginn der Durchführung einer Verschwenkbewegung der Anhängerkupplung 16 die Einhaltung vorgebbarer Sicherheitsparameter 13 geprüft. Nur im Falle der Einhaltung dieser Parameter 13 gibt die Prüfeinrichtung 12 eine Verschwenkbewegung der Anhängerkupplung 16 frei, was in der Darstellung nach Figur 1 durch das Steuersignal 14 symbolisiert ist. Das entsprechende Steuersignal aus der Vergleichseinrichtung 8 trägt das Bezugszeichen 11. Schaltungstechnisch können die Steuereinrichtung 16 und die Prüfeinrichtung 12 als integrale Schaltung ausgebildet sein.

Das Steuermodul 1 steuert und überwacht die elektromotorisch verschwenkbare Anhängerkupplung 16. Dabei wird das Modul 1 über eine Sicherung von der Batterie des Kraftfahrzeuges mit 12 Volt gespeist.

Wird die Heckklappe des Kraftfahrzeuges geöffnet, wird das Steuermodul 1 geweckt, das heißt in den aktiven Zustand versetzt. Es befindet sich nun im Arbeitsmodus und ist bereit, die Anhängerkupplung 16 zu verschwenken.

Um die Funktion des Steuermoduls 1 zu starten, ist das Bedienelement 2 benutzerseitig zu betätigen. Sobald das Bedienelement 2 losgelassen wird, schwenkt die Anhängerkupplung selbstständig in die Ruhe- beziehungsweise die Arbeitsposition, je nachdem aus welcher Endposition die Verfahrbewegung der Anhängerkupplung 16 startet.

Sobald die Heckklappe des Kraftfahrzeuges geschlossen wird und/oder für mehr als 10 Minuten nach einem vorherigen Öffnen der Heckklappe eine Verschwenkbewegung der Anhängerkupplung 16 nicht gestartet wird, wechselt das Steuermodul 1 in den Stromsparmodus, das heißt den Stand-by-Modus. Um wieder in den Arbeitsmodus zu wechseln, ist die Heccklappe des Kraftfahrzeuges zunächst zu schließen und alsdann wieder zu öffnen.

Das Bedienelement 2 ist mit einer vorzugsweise grünen LED 3 ausgestattet, welche den Status der Anhängerkupplung 16 anzeigt. Zusätzlich hat das Steuermodul 1 einen internen Summer 5, welcher einen laufenden oder abgebrochenen Verschwenkvorgang der Anhängerkupplung 16 akustisch signalisiert. Es können folgende Betriebszustände beispielhaft wie folgt visuell und akustisch ausgegeben werden:
- LED 3 leuchtet grün: verriegelte Endposition der Anhängerkupplung 16
- LED 3 blinkt grün mit 8 Hz: Endposition der Anhängerkupplung 16 wird in Folge einer Verschwenkbewegung der Anhängerkupplung 16 erreicht.
- LED 3 blinkt grün mit 8 Hz und der Summer 5 gibt ein Signal mit 2 Hz ab: Schwenkvorgang der Anhängerkupplung 16 läuft.
- 10 x LED 3 grün blinkend und Summer 5 gibt ein 8 Hz-Signal ab: Abbruch des Schwenkvorgangs.
- LED 3 leuchtet nicht: Steuermodul 1 im Stromsparmodus.

Das Steuermodul 1 verfügt desweiteren über eine LED 4, bei der es sich beispielsweise um eine rote LED 4 handeln kann. Diese zeigt den Status der Kraftfahrzeugbatterie und die Funktionstüchtigkeit des Steuermoduls 1 selbst an. Blinkt die LED 4, ist entweder die Batteriespannung unzureichend oder das Steuermodul 1 ist defekt. Ein Verschwenken der Anhängerkupplung 16 ist jedenfalls nicht möglich, was dem Benutzer durch das Blinken der LED 4 angezeigt wird. Leuchtet die LED 4 dauerhaft rot, ist eine ordnungsgemäße Funktion sichergestellt.

Folgende Konstellationen führen zu einer sofortigen Beendigung einer Verschwenkbewegung der Anhängerkupplung 16:
- Spannungsabfall
   Fällt die Speisung während eines Schwenkvorgangs aus, beispielsweise weil eine Sicherung defekt ist, das Steuermodul 1 ausfällt oder die Batterie des Kraftfahrzeugs abgeklemmt wird, verliert das Steuermodul 1 seine initialisierten Parameter. Sobald die Spannung wieder hergestellt ist, setzt sich das Steuermodul 1 in seine Werkseinstellungen zurück und muss neu initialisiert, das heißt reinitialisiert werden.
- Heckklappe zu
   Der Verschwenkvorgang der Anhängerkupplung 16 wird abgebrochen, sobald die Heckklappe des Kraftfahrzeugs geschlossen wird. Sobald die Heckklappe des Kraftfahrzeugs wieder geöffnet wird, kann durch eine erneute Betätigung des Bedienelements 2 der Schwenkvorgang fortgesetzt werden.
- Zündung wird eingeschaltet
   Der Verschwenkvorgang der Anhängerkupplung 16 wird ebenfalls sofort abgebrochen, sobald die Zündung des Fahrzeugs eingeschaltet wird. Sobald die Zündung wieder ausgeschaltet ist, kann durch erneute Betätigung des Bedienelements 2 der Schwenkvorgang fortgesetzt werden.
- Bedienelement 2 wird gedrückt
   Der Verschwenkvorgang der Anhängerkupplung wird abgebrochen, sobald das Bedienelement 2 erneut gedrückt, das heißt betätigt wird. Durch erneute Bedienelementbetätigung kann der Schwenkvorgang fortgesetzt werden.
- Blockierung
   Der Verschwenkvorgang der Anhängerkupplung wird abgebrochen, sobald die Anhängerkupplung 16 in ihrer Verschwenkbewegung blockiert. Durch erneuten Tastendruck kann der Verschwenkvorgang in entgegengesetzter Richtung, das heißt zurück in die ehemalige Ausgangsposition fortgesetzt werden. Sobald diese ehemalige Ausgangsposition erreicht ist, kann durch erneutes Betätigen des Bedienelements 2 ein wiederholter Verschwenkvorgang gestartet werden.

Infolge eines unvorhersehbaren Fehlverhaltens der Anhängerkupplung kann es notwendig werden, dass der Verfahrweg neu erlernt werden muss.

Um die momentan gültige Konfiguration zu löschen, muss die Heckklappe des Kraftfahrzeuges geöffnet und die Zündung des Kraftfahrzeuges eingeschaltet werden. Danach ist das Bedienelement innerhalb von 30 Sekunden viermal für je 3 Sekunden zu betätigen. Jede erfolgreiche Betätigung des Bedienelements 2 wird mit einem kurzen Signal vom Summer 5 bestätigt. Anschließend erlischt die grüne LED 3 und die aktuelle Konfiguration wird gelöscht.

Um anschließend den Einlernvorgang zu starten, ist das Bedienelement 2 zu betätigen. Während des Einlernvorgangs wird die Anhängerkupplung 16 zuerst komplett eingeschwenkt, um den Nullpunkt zu erkennen. Anschließend wird die Anhängerkupplung 16 einmal aus- und eingeschwenkt. Sofern der Einlernvorgang erfolgreich war, leuchtet die grüne LED 3 dauerhaft und die Anhängerkupplung 16 ist wieder einsatzbereit.

### Bezugszeichenliste

- 1: Steuermodul
- 2: Bedienelement
- 3: LED
- 4: LED
- 5: Summer
- 6: Steuereinrichtung
- 7: Messeinrichtung
- 8: Vergleichseinrichtung
- 9: Signal
- 10: Sollwert
- 11: Steuersignal
- 12: Prüfeinrichtung
- 13: Sicherheitsparameter
- 14: Steuersignal
- 15: Motor
- 16: Anhängerkupplung

## Patentansprüche

1. Steuermodul zur Steuerung einer Verschwenkbewegung einer mittels eines Motors (15) vollautomatisch aus einer Ruheposition in eine Arbeitsposition und umgekehrt verfahrbaren Anhängerkupplung (16) eines Kraftfahrzeugs, mit einer Steuereinrichtung (6), die bei einer Verschwenkbewegung der Anhängerkupplung (16) mit einer Messeinrichtung (7) vorgebbare Verschwenkparameter misst und dem Messergebnis entsprechende Signale (9) abgibt, die mit einer Vergleichseinrichtung (8) diese Signale (9) mit vorgebbaren Sollwerten (10) vergleicht und im Falle einer Überschreitung der Sollwerte (10) die Verschwenkbewegung der Anhängerkupplung (16) vorzeitig in einer Position des Notstopps beendet, sowie mit einem ausschließlich benutzerseitig betätigbaren Bedienelement (2), dessen manuelle Betätigung die Verschwenkbewegung aus der Ruheposition in die Arbeitsposition und umgekehrt einleitet und dessen nochmalige manuelle Betätigung während der Verschwenkbewegung einen Abbruch des Verschwenkvorgangs bewirkt und dessen erneute manuelle Betätigung ein Zurückverfahren der Anhängerkupplung (16) aus ihrer Position des Notstopps in die anfängliche Ausgangsposition bewirkt, **gekennzeichnet durch** eine Prüfeinrichtung (12), die vor Beginn der Durchführung einer Verfahrbewegung der Anhängerkupplung (16) die Einhaltung vorgebbarer Sicherheitsparameter (13) prüft und nur im Falle der Einhaltung dieser Parameter (13) eine Verschwenkbewegung der Anhängerkupplung (16) freigibt.

2. Steuermodul nach Anspruch 1, **gekennzeichnet durch** einen visuellen und/oder akustischen Signalgeber (3, 5), der während einer anhaltenden Verschwenkbewegung der Anhängerkupplung (16) ein visuelles und/oder akustisches Signal abgibt.

3. Steuermodul nach Anspruch 1 oder 2, **gekennzeichnet durch** einen visuellen und/oder akustischen Signalgeber (3, 5), der bei Erreichen einer Endposition der Anhängerkupplung (16) ein visuelles und/oder akustisches Signal abgibt.

4. Steuermodul nach einem der vorhergehenden Ansprüche, **gekennzeichnet durch** einen visuellen und/oder akustischen Signalgeber (4, 5), der bei nicht ordnungsgemäßer Stromversorgung und/oder defektem Steuermodul (1) ein visuelles und/oder akustisches Signal abgibt.

5. Verfahren zum Verschwenken einer mittels eines Motors (15) vollautomatisch aus einer Ruheposition in eine Arbeitsposition und umgekehrt verschwenkbaren Anhängerkupplung (16) eines Kraftfahrzeugs, bei dem bei einer Verschwenkbewegung der Anhängerkupplung (16) vorgebbare Verschwenkparameter gemessen und dem Messergebnis entsprechende Signale (9) abgegeben werden, bei dem diese Signale (9) mit vorgebbaren Sollwerten (10) verglichen werden, und bei dem im Falle einer Überschreitung der Sollwerte (10) die Verfahrbewegung der Anhängerkupplung (16) vorzeitig in einer Position des Notstopps beendet wird, wobei mittels einer manuellen Betätigung eines Bedienelements (2) die Verschwenkbewegung aus der Ruheposition in die Arbeitsposition und umgekehrt eingeleitet wird und wobei mittels der nochmaligen manuellen Betätigung des Bedienelements (2) während der Verschwenkbewegung der Verschwenkvorgang abgebrochen wird und wobei mittels der erneuten manuellen Betätigung des Bedienelements (2) ein Zurückverfahren der Anhängerkupplung (16) aus ihrer Position des Notstopps in die anfängliche Ausgangsposition bewirkt wird, **dadurch gekennzeichnet, dass** vor Beginn der Durchführung einer Verfahrbewegung der Anhängerkupplung (16) die Einhaltung vorgebbarer Sicherheitsparameter (13) überprüft wird, wobei eine Verfahrbewegung der Anhängerkupplung (16) nur im Falle der Einhaltung dieser Parameter (13) freigegeben wird.

6. Verwendung eines Steuermoduls (1) nach einem der vorhergehenden Ansprüche 1 bis 4 für eine nachrüstbar ausgestaltete Anhängerkupplung (16).

## Claims

1. A control module for controlling a pivoting movement of a trailer coupling (16) of a motor vehicle, which trailer coupling can be displaced from a resting position into a working position and vice versa in a fully automatic manner by means of a motor (15), comprising a control device (6) which measures pre-determinable pivoting parameters by means of a measuring device (7) in case of a pivoting movement of the trailer coupling (16) and sends out signals (9) corresponding to the measurement result, and which compares these signals (9) with pre-determinable set values (10) by means of a comparator (8) and prematurely terminates the pivoting movement of the trailer coupling (16) in a position of the emergency stop, if the set values (10) are exceeded, as well as comprising an actuation element (2) which can be exclusively actuated by a user and the manual actuation of which initiates the pivoting movement from the resting position into the working position and vice versa, and the repeated manual actuation of which during the pivoting movement provokes a cancellation of the pivoting movement and the still repeated manual actuation of which causes the trailer coupling (16) to return from the position of the emergency stop into the initial starting position, **characterized by** a checking device (12) which checks, before starting a displacing movement of the trailer coupling (16), whether pre-determinable security parameters (13) have been observed and only if these parameters (13) have been observed, the checking device (12) will allow a displacing movement of the trailer coupling (16).

2. A control module according to claim 1, **characterized by** a visual and/or acoustic signaling device (3, 5) which emits a visual and/or acoustic signal during a continuing pivoting movement of the trailer coupling (16).

3. A control module according to claim 1 or 2, **characterized by** a visual and/or acoustic signaling device (3, 5) which emits a visual and/or acoustic signal if the trailer coupling (16) has reached an end position.

4. A control module according to one of the preceding claims, **characterized by** a visual and/or acoustic signaling device (4, 5) which emits a visual and/or acoustic signal in case of an improper power supply and/or a malfunctioning control module (1).

5. A method for pivoting a trailer coupling (16) of a motor vehicle, which trailer coupling can be displaced from a resting position into a working position and vice versa in a fully automatic manner by means of a motor (15), in which method pre-determinable pivoting parameters are measured in case of a pivoting movement of the trailer coupling (16) and signals (9) corresponding to the measurement result will be emitted, in which these signals (9) will be compared with pre-determinable set values (10) and if the set values (10) are exceeded, the displacing movement of the trailer coupling (16) will be prematurely terminated in a position of an emergency stop, wherein the manual actuation of an actuation element (2) initiates the pivoting movement from the resting position into the working position and vice versa, and wherein the repeated manual actuation of the actuation element (2) during the pivoting movement provokes an interruption of the pivoting movement and wherein the still repeated manual actuation of the actuation element (2) causes the trailer coupling (16) to return from its position of the emergency stop into the initial starting position, **characterized in that** before starting a displacing movement of the trailer coupling (16), it is checked whether pre-determinable security parameters (13) have been observed and only if these parameters (13) have been observed, a displacing movement of the trailer coupling (16) will be allowed.

6. A utilization of a control module (1) according to one of the preceding claims 1 through 4 for a trailer coupling (16) which can be retrofitted.

## Revendications

1. Module de commande destiné à commander le mouvement de pivotement d'un attelage de remorque (16) d'un véhicule à moteur, lequel attelage de remorque peut être déplacé de manière complètement automatique d'une position de repos à une position de travail et vice versa par moyen d'un moteur (15), comprenant un dispositif de commande (6) qui mesure des paramètres de pivotement pré-déterminables par moyen d'un dispositif de mesure (7) dans le cas d'un mouvement de pivotement de l'attelage de remorque (16) et émet des signaux (9) correspondant au résultat de mesure, et qui compare ces signaux (9) à des valeurs de consigne (10) pré-déterminables par moyen d'un dispositif de comparaison (8) et qui termine prématurément le mouvement de pivotement de l'attelage de remorque (16) dans une position de l'arrêt d'urgence, si les valeurs de consigne (10) sont excédées, ainsi que comprenant un organe de manœuvre (2) exclusivement actionnable par un utilisateur et dont l'actionnement manuel entame le mouvement de pivotement de la position de repos dans la position de travail et vice versa, et dont le nouvel actionnement manuel pendant le mouvement de pivotement cause un arrêt de l'action de pivotement et dont le nouvel actionnement manuel cause un retour de l'attelage de remorque (16) de sa position d'arrêt d'urgence à la position de départ initiale, **caractérisé par** un dispositif de contrôle (12) qui vérifie, avant qu'un déplacement de l'attelage de remorque (16) soit commencé, si des paramètres de sécurité (13) pré-déterminables ont été observés, et qui ne permet un mouvement de pivotement de l'attelage de remorque (16) que dans le cas d'une observation de ces paramètres (13).

2. Module de commande selon la revendication 1, **caractérisé par** un générateur de signaux (3, 5) visuels et/ou acoustiques, lequel générateur de signaux émet un signal visuel et/ou acoustique pendant un mouvement de pivotement continuel de l'attelage de remorque (16).

3. Module de commande selon la revendication 1 ou la revendication 2, **caractérisé par** un générateur de signaux (3, 5) visuels et/ou acoustiques, lequel générateur de signaux émet un signal visuel et/ou acoustique, si l'attelage de remorque (16) arrive à une position finale.

4. Module de commande selon l'une des revendications précédentes, **caractérisé par** un générateur de signaux (4, 5) visuels et/ou acoustiques, lequel générateur de signaux émet un signal visuel et/ou acoustique dans le cas d'une alimentation électrique inadéquate et/ou d'un module de commande (1) défectueux.

5. Procédé destiné à faire pivoter un attelage de remorque (16) d'un véhicule à moteur, lequel attelage de remorque peut être déplacé de manière complètement automatique d'une position de repos à une position de travail et vice versa par moyen d'un moteur (15), dans lequel des paramètres de pivotement pré-déterminables sont mesurés dans le cas d'un mouvement de pivotement de l'attelage de remorque (16) et des signaux (9) correspondant au résultat de mesure sont émis, dans lequel ces signaux (9) sont comparés à des valeurs de consigne (10) pré-déterminables et dans lequel le déplacement de l'attelage de remorque (16) sera terminé prématurément dans une position de l'arrêt d'urgence si les valeurs de consigne (10) sont excédées, dans lequel un actionnement manuel d'un organe de manœuvre entame le mouvement de pivotement de la position de repos dans la position de travail et vice versa, et dans lequel le nouvel actionnement manuel de l'organe de manœuvre (2) pendant le mouvement de pivotement cause un arrêt de l'action de pivotement et le nouvel actionnement manuel de l'élément de manœuvre (2) cause un retour de l'attelage de remorque (16) de sa position d'arrêt d'urgence à la position de départ initiale, **caractérisé en ce qu'**avant de commencer à exécuter un déplacement de l'attelage de remorque (16), il sera vérifié si des paramètres de sécurité (13) pré-déterminables ont été observés, et un déplacement de l'attelage de remorque (16) ne sera permis que dans le cas d'une observation de ces paramètres (13).

6. Utilisation d'un module de commande (1) selon l'une des revendications précédentes 1 à 4 dans un attelage de remorque (16) susceptible d'être adapté ultérieurement.
